# EUROPÄISCHE PATENTSCHRIFT

(11) **EP 0 814 327 B1**
(45) Veröffentlichungstag und Bekanntmachung des Hinweises auf die Patenterteilung: **21.01.2004**
(21) Anmeldenummer: 97107017.2
(22) Anmeldetag: 28.04.1997
(51) Int. Cl.: G01K 1/20

(54) **Verfahren zur korrekten Aussentemperaturerfassung**
Method for recording the correct external temperature
Méthode pour obtenir une saisie correcte de la température extérieure

(30) Priorität: 17.06.1996 DE 19624078
(43) Veröffentlichungstag der Anmeldung: 29.12.1997
(73) Patentinhaber: Bayerische Motoren Werke Aktiengesellschaft, 80788 München (DE)
(72) Erfinder: Würtenberger, Michael, 82008 Unterhaching (DE)

(56) Entgegenhaltungen:
- DE-A- 4 130 680
- US-A- 5 416 728
- T. NABAUER E.A.: "VERKURZUNG DER MESSZEIT BEI TEMPERATURMESSUNGEN DURCH RECHNERGESTUTZTE AUSWERTUNG DES EINSCHWINGVERHALTENS" MESSEN + PRUFEN., Bd. 20, Nr. 1/2, Januar 1984, BAD WORISHOFEN DE, Seiten 30-35, XP002041602

## Beschreibung

Die Erfindung betrifft ein Verfahren zur korrekten Außentemperaturerfassung.

Bei Fahrzeugen sind zur Außentemperaturerfassung herkömmlicherweise Temperatursensoren im Motorraum vorgesehen, die ein der Umgebungstemperatur entsprechendes Signal abgeben. Die Bestimmung der Außentemperatur ist beispielsweise zur Steuerung bzw. Regelung eines Heiz- oder Klimasystems eines Fahrzeugs erforderlich.

Nachteilig bei bisherigen Systemen ist, daß Fahrzeugeinflüsse - insbesondere die Motorwärme - keine korrekte Außentemperaturerfassung ermöglichen. Durch die vom Motorblock abgegebene Wärme wird der üblicherweise im Motorraum untergebrachte Außentemperatursensor je nach Fahrzeuggeschwindigkeit unterschiedlich erwärmt und entsprechend die Temperaturerfassung verfälscht. Die Patentschriften US-A-5 416 728 und DE-A-4 130 680 offenbaren Vorrichtungen, die versuchen, dieses Problem zu lösen, indem die Anzeige eines zu hohen Wertes der Auben temperatur bei noch warmen Motor und nach Einschalten der Zündung vermieden wird.

Aufgabe der Erfindung ist es, ein Verfahren zur korrekten Temperaturerfassung anzugeben, bei dem solche Fehler möglichst ausgeglichen werden.

Diese Aufgabe wird durch die im Anspruch 1 angegebenen Merkmale gelöst.

Insbesondere ist damit ein verbessertes Verhalten der Außentemperaturanzeige in Problemsituationen, beispielsweise bei stop-and-go-Verkehr, beim Abstellen des Fahrzeugs - z. B. in einer Tiefgarage - oder bei einer Fahrpause während einer Autobahnfahrt etc., sichergestellt. Entsprechend dem Anspruch 1 wird die Außentemperatur zunächst in herkömmlicher Weise mittels eines in einem Fahrzeug angeordneten Temperatursensors erfaßt und ein entsprechendes Temperatursignal gebildet. Dann werden die Fahrzeugbetriebs- und/oder Fahrzeugzustandsbedingungen - wie beispielsweise die Motoröltemperatur, die Kühlmitteltemperatur oder die Fahrzeuggeschwindigkeit - erfaßt. Anhand dieser Fahrzeugbetriebs- und/oder Fahrzeugzustandsbedingungen werden dann entsprechende Korrekturwerte ermittelt, die beispielsweise in einer Tabelle, z. B. abhängig von den jeweiligen Parametern, abgelegt sein können. Mittels der Korrekturwerte wird das vom Temperatursensor abgegebene Temperatursignal entsprechend abgeändert, so daß schließlich ein korrigiertes Temperatursignal vorliegt, welches der korrekten Außentemperatur tatsächlich entspricht.

Die systematischen Meßfehler werden also durch ein geeignetes Temperaturmodell beschrieben, welches zur Korrekturberechnung herangezogen wird. Dabei kann dieses Verfahren parallel oder ergänzend zu anderen konstruktiven Lösungsansätzen verwendet werden.

Bei der Aufstellung des geeigneten Temperaturmodells können die Wärmeübergangswiderstände zwischen verschiedenen Komponenten, beispielsweise zwischen dem Motor und dem Motoröl oder dem Motoröl und dem Kühlwassersystem etc. entsprechend dargestellt werden. In gleicher Weise können die den verschiedenen Komponenten innewohnenden Wärmekapazitäten durch Wärmekapazitäts-Modellteile beschrieben werden. Auf diese Art und Weise kommt man zu einem "thermischen Ersatzschaltbild", welches die verschiedenen Wärmeströmungen bzw. Wärmeübergänge nachbildet.

Geschwindigkeits- und fahrzeugabhängige Parameter können in Kennlinien oder aber auch in Tabellen abgelegt sein.

Möchte man auf jeden Fall eine minimale Temperatur angezeigt bekommen, so kann das vom Temperatursensor tatsächlich erzeugte Signal sowie das korrigierte Signal einer Vorrichtung zur Minimumbildung zugeleitet werden, die das einer minimalen Temperatur entsprechende Signal auswählt und weiterleitet.

Die Erfindung wird nachfolgend - auch hinsichtlich weiterer Vorteile und Merkmale - mit Bezug auf beiliegende Zeichnungen näher erläutert, in denen
- Fig. 1: ein thermisches Ersatzschaltbild eines Gesamtsystems von Motorraum und Sensor in stark schematisierter Weise darstellt und
- Fig. 2: ein stark schematisiertes Blockdiagramm zur Durchführung des erfindungsgemäßen Verfahrens ist.

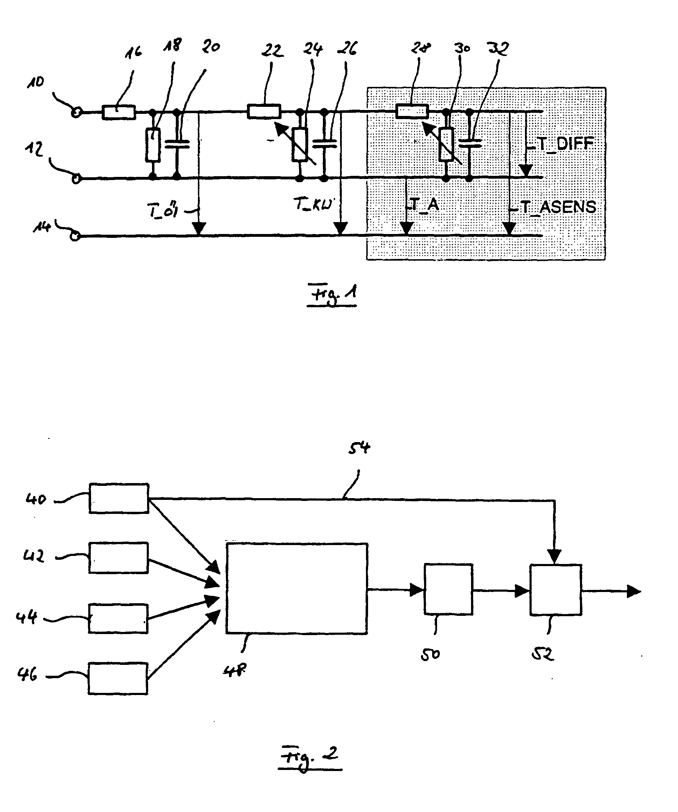

In Fig. 1 ist für die theoretische Nachbildung des Wärmeflusses ein thermisches Ersatzschaltbild für ein Gesamtsystem von Motorraum eines Kraftfahrzeugs und einem Außentemperatursensor dargestellt. Dabei sind exteme Störeinflüsse wie Wind etc., noch nicht berücksichtigt.

Mit der Bezugsziffer 10 ist das Niveau der Motorverbrennungswärme, mit der Bezugsziffer 12 die Außentemperatur und mit der Bezugsziffer 14 eine Bezugstemperatur bezeichnet.

Im ersten (linken) Teil der Fig. 1 ist ein Wärmeübergangsmodell von den Verbrennungsräumen auf das Motoröl dargestellt. Dabei stellen die Widerstände 16 und 18 entsprechende Wärmeübergangswiderstände dar und das mit der Bezugsziffer 20 bezeichnete Ersatzschaltteil eine entsprechende Wärmekapazität des Motorenölsystems.

Im zweiten (mittigen) Teil der Fig. 1 ist ein Temperaturmodell für den Übergang zum Kühlwasser dargestellt, wobei die Bezugsziffern 22 und 24 Wärmeübergangswiderstände bezeichnen. Der Wärmeübergangswiderwiderstand 24 ist als veränderlicher Widerstand dargestellt, welcher entsprechend den fahrzeugspezifischen oder umgebungsspezifischen Bedingungen verändert bzw. gewählt werden kann.

Der letzte (rechte) Teil in Fig. 1 schließlich gibt den für die Außentemperatur modellierten Teil an, welcher mit den Wärmeübergangswiderständen 28 und 30 gebildet ist. Dabei ist der Wärmewiderstand 30 wiederum ein veränderlicher Widerstand, der entsprechend den Fahrzeug- und Umgebungswerten eingestellt oder ausgewählt werden kann. Mit der Bezugsziffer 32 ist die Wärmekapazität des Temperatursensors nachgebildet.

Mit dem Pfeil T_Öl ist die Temperaturdifferenz zwischen der Öltemperatur und der Bezugstemperatur dargestellt, mit dem Pfeil T_KW die Temperaturdifferenz zwischen dem Kühlwasser und der Bezugstemperatur und mit dem Pfeil T_ASENS die Temperaturdifferenz zwischen dem Temperatursensor und der Bezugstemperatur. Der Pfeil T_A entspricht der Temperaturdifferenz zwischen der Außentemperatur und der Bezugstemperatur und der Pfeil T_DIFF entspricht der Temperaturdifferenz, die vom Sensor zur Umwelt besteht.

Mit dem in Fig. 1 dargestellten Wärmeübergangsmodell können mit den entsprechenden Werten für die Wärmeübergangswiderstände 16, 18, 22, 24, 28 und 30 sowie den Wärmekapazitäten 20, 26 und 32 die Temperaturübergänge von den Zylindern zum Motoröl, vom Motoröl zum Kühlwasser und vom Sensor zur Umwelt nachgebildet werden. Dabei werden die systematischen Fehler, die durch das Aufheizen des Sensors durch die Motorwärme erfolgt, beschrieben. Zu beachten ist, daß der Wärmeübergangswiderstand zwischen Sensor und Umwelt stark von der Umspülung mit Luft, d. h. in erster Näherung von der Fahrzeuggeschwindigkeit, abhängig ist.

Unabhängig von den konstruktiven Maßnahmen soll mit dem vorliegenden Verfahren versucht werden, den Sensor mit seinem Umfeld und den systematischen Meßfehlern mathematisch durch ein Modell zu beschreiben. In einem separaten Schritt wird nach der Identifikation der Modellparameter eine Fehlerrückrechnung bzw. Fehlerkorrektur realisiert. Dazu werden die Parameter identifiziert. Dies könnte speziell für jedes Fahrzeug bestimmt werden. Bei dieser Spezifizierung werden die vorgenannten Wärmeübergangswiderstände und die Wärmekapazitäten ermittelt. Die Bestimmung erfolgt anhand von Messungen unter Zuhilfenahme eines Optimierungsverfahrens (beispielsweise Simplex-Downhill) auf der Basis eines quadratischen Gütekriteriums. Durch das quadratische Gütekriterium wird vermieden, daß sich Fehler gegenseitig aufheben.

Geschwindigkeits- und fahrzeugabhängige Parameter werden in einer Kennlinie abgespeichert, die entsprechend der detektierten Geschwindigkeit einen entsprechenden Parameterwert liefert. Beim vorliegenden Verfahren sind acht Stützstellen zur Definition der Kennlinie vorgesehen. Alternativ könnte natürlich auch eine Tabelle verwendet werden, in der entsprechend den Geschwindigkeiten die entsprechenden geschwindigkeits- und fahrzeugabhängigen Parameter abgespeichert sind.

In Fig. 2 ist in stark schematisierter Weise ein Ausführungsbeispiel für eine Durchführung des vorgenannten Verfahrens dargestellt. Dabei bezeichnen die Bezugsziffern 40, 42, 44 und 46 in dieser Reihenfolge einen Außentemperatursensor, einen Kühlmitteltemperatursensor, einen Geschwindigkeitssensor, sowie einem Erfassungsmittel, welches anzeigt, ob Klemme 15 (Zündung "ein") oder Klemme 30 (Zündung "aus") aktiv ist. Alle Signale der vorgenannten Sensoren oder Erfassungsmittel werden an eine Recheneinheit 48 weitergegeben, welche aufgrund der Kühlmitteltemperatur, der Geschwindigkeit und der Klemmenerfassung, sowie unter Berücksichtigung von abgespeicherten spezifischen Parametern eine Korrektur des Außentemperatursignals vornimmt. Dieses Außentemperatursignal wird dann auf einen Tiefpaß 50 gegeben, welcher das Signal an eine Einrichtung 52 weiterleitet. Die Einrichtung 52 ist zur Bildung eines Minimums vorgesehen und zwar zwischen dem korrigierten Temperatursignal aus dem Tiefpaß 50 sowie dem unmittelbaren Temperatursignal des Außentemperatursensors 40, welches über die Leitung 54 der Erfassungseinrichtung 52 zur Verfügung gestellt wird. Von der Erfassungseinrichtung 52 wird schließlich die Minimaltemperatur ausgegeben, so daß diese immer vorliegt.

Insgesamt ist mit der vorliegenden Erfindung ein Verfahren geschaffen, welches die Ausgabe eines korrekten Außentemperatursignals ermöglicht, indem Umgebungseinflüsse, wie beispielsweise der Einfluß der Motorwärme auf den Außentemperaturfühler, in einem parallel ablaufenden Modell berücksichtigt und entsprechende Korrekturen an dem Temperatursignal vorgenommen werden. Das Temperatursignal entspricht damit der tatsächlichen Außentemperatur, so daß die davon zu steuernden Einrichtungen, wie beispielsweise das Heizungs- oder Klimasystem, korrekt arbeiten können.

## Patentansprüche

1. Verfahren zur korrekten Außentemperaturerfassung bei einem Fahrzeug mit den Schritten
- Erfassen der Außentemperatur mittels eines in einem Fahrzeug angeordneten Temperatursensors und Bildung eines entsprechenden Temperatursignals,
- Erfassen von Fahrzeugbetriebs- und/oder Fahrzeugzustandsbedingungen,
- Ermitteln von Korrekturwerten in Abhängigkeit der Fahrzeugbetriebsund/oder Fahrzeugzustandsbedingungen und
- Abänderung des vom Temperatursensor abgegebenen Temperatursignals mittels der Korrekturwerte.

2. Verfahren nach Anspruch 1
**dadurch gekennzeichnet, daß** bei den Fahrzeugbetriebs- und/oder Fahrzeugzustandsbedingungen zumindest die Kühlmitteltemperatur, die Motoröltemperatur und/oder die Fahrgeschwindigkeit berücksichtigt werden.

3. Verfahren nach Anspruch 1 oder 2,
**dadurch gekennzeichnet, daß** zur Ermittelung der Korrekturwerte zumindest bestimmte Wärmeübergangswiderstände zwischen dem Motor und dem Kühlmittelsystem, dem Motor und der Außenumgebung sowie dem Temperatursensor und der Außenumgebung und/oder die Wärmekapazitäten des Motors und des Temperatursensors angenommen werden.

4. Verfahren nach Anspruch 3.
**dadurch gekennzeichnet, daß** die Wärmeübergangswiderstände und die Wärmekapazitäten fahrzeugspezifisch experimentell ermittelt sind.

5. Verfahren nach einem der vorhergehenden Ansprüche,
**dadurch gekennzeichnet, daß** für geschwindigkeitsabhängige Parameter Kennlinien verwendet werden.

6. Verfahren nach einem der vorhergehenden Ansprüche,
**dadurch gekennzeichnet, daß** das vom Temperatursensor erzeugte Signal sowie das korrigierte Signal einer Vorrichtung zur Minimumbildung zugeleitet werden, die das einer minimalen Temperatur entsprechende Signal auswählt und weiterleitet.

## Claims

1. A method for correct external temperature assessment in a vehicle comprising the steps
- obtaining the external temperature by means of a temperature sensor arranged in a vehicle and formation of a corresponding temperature signal
- detecting vehicle operating and/or vehicle state conditions
- determining correction values as a function of the vehicle operating and/or vehicle state conditions and
- changing the temperature signal emitted by the temperature sensor by means of the correction values.

2. A method according to claim 1, **characterised in that** at least the coolant temperature, the engine oil temperature and/or the driving speed are taken into account in the vehicle operating and/or vehicle state conditions.

3. A method according to claim 1 or 2, **characterised in that** to determine the correction values, at least certain heat transmission resistances between the engine and the coolant system, the engine and the external environment and the temperature sensor and the external environment and/or the heat capacities of the engine and the temperature sensor are assumed.

4. A method according to claim 3, **characterised in that** the heat transmission resistances and the heat capacities are determined experimentally in a Vehicle-specific manner.

5. A method according to any one of the preceding claims, **characterised in that** characteristic curves are used for speed-dependent parameters.

6. A method according to any one of the preceding claims, **characterised in that** the signal generated by the temperature sensor and the corrected signal are supplied to a device for forming a minimum which selects and relays the signal corresponding to a minimum temperature.

## Revendications

1. Procédé pour saisir de manière correcte la température extérieure dans un véhicule automobile, comprenant les étapes suivantes :
- saisie de la température extérieure au moyen d'un capteur de température agencé dans un véhicule automobile et constitution d'un signal de température correspondant ;
- saisie des conditions de fonctionnement du véhicule automobile et/ou des conditions d'état du véhicule automobile ;
- détermination de valeurs de correction en fonction des conditions de fonctionnement du véhicule automobile et/ou de l'état du véhicule automobile, et
- modification du signal de température fourni par le capteur de température au moyen de valeurs de correction.

2. Procédé selon la revendication 1,
**caractérisé en ce que**
dans les conditions de fonctionnement du véhicule automobile et/ou l'état du véhicule automobile, au moins la température du réfrigérant, la température de l'huile du moteur et/ou la vitesse sont prises en compte.

3. Procédé selon la revendication 1 ou 2,
**caractérisé en ce que**
pour déterminer les valeurs de correction, on suppose au moins certaines résistances de transfert thermique entre le moteur et le système de réfrigérant, le moteur et l'environnement extérieur ainsi que le capteur de température et l'environnement extérieur et/ou les capacités thermiques du moteur et du capteur de température.

4. Procédé selon la revendication 3,
**caractérisé en ce que**
les résistances de transfert thermique et les capacités thermiques sont déterminées de manière expérimentale et spécifique au véhicule automobile.

5. Procédé selon l'une des revendications précédentes,
**caractérisé en ce qu'**
on utilise comme paramètres fonction de la vitesse des lignes caractéristiques.

6. Procédé selon l'une des revendications précédentes,
**caractérisé en ce que**
le signal produit par le capteur de température ainsi que le signal corrigé est acheminé à un dispositif de constitution minimale qui sélectionne et transmet le signal correspondant à une température minimale.
